# FASCICULE DE BREVET EUROPEEN

(11) **EP 0 841 709 B1**
(45) Date de publication et mention de la délivrance du brevet: **15.03.2000**
(21) Numéro de dépôt: 96402392.3
(22) Date de dépôt: 08.11.1996
(51) Int. Cl.: H01M 2/02, G09F 3/02

(54) **Etiquette de protection et décoration notamment pour pile électrique**
Schutz und Schmucketickette, insbesondere für eletrische Batterie
Protection and decoration label, especially for electric battery

(43) Date de publication de la demande: 13.05.1998
(73) Titulaire: Rotanotice, 16800 Soyaux (FR)
(72) Inventeur: Huault, Yves, 16410 Torsac (FR)
(74) Mandataire: Derambure, Christian

(56) Documents cités:
- FR-A- 2 674 979
- FR-A- 2 680 132
- GB-A- 2 193 834
- US-A- 4 608 323

## Description

La présente invention concerne le domaine des surfaces de protection et de signalisation constituant des moyens d'étiquettage, notamment pour des composants électriques tels que les piles d'alimentation.

On connaît déjà des étiquettes pour piles, monocouches ou multicouches.

L'on peut se référer, par exemple, aux documents suivants : FR-A-2.578.684, FR-B-2.674.979, FR-A-2.680.132, FR-A-2.715.494, EP-B-129 850, EP-B-176.704, EP-B-388.998, GB-1.387.619, US-4.287.274, US-4.399.182, US-4.409.051, J0-7271300. GB 2 193 834 décrit une pellicule de protection multicouche à base de PVC thermorétractable mono-orienté pour pile électrique comportant une couche de vernis entre la couche d'adhésif et la couche de métallisation.

Les étiquettes pour piles sont réalisées fréquemment en film PVC, ce polymère étant utilisé essentiellement en raison de son aptitude à la thermorétraction.

Les étiquettes pour piles, en PVC, peuvent être monofilm.

Dans ce cas, elles sont conventionnellement imprimées sur la face externe du film PVC et sont généralement appliquées sur des batteries qui ne demandent pas un aspect métallique pour le décor.

Le mode d'impression conventionnel est la sérigraphie qui permet d'obtenir un bon masquage des inscriptions techniques pouvant se trouver sur le corps de pile.

Une étiquette monofilm en PVC pour piles comprend le plus souvent un support siliconé, une colle adhésive, un film PVC et une couche d'impression.

Une métallisation est parfois prévue pour le décor.

Dans ce type d'étiquette monofilm, il n'y a pas de protection du décor contre les agressions dans les manipulations de transport, mise en place au moment de l'utilisation de la pile ou de sa recharge éventuelle.

Les étiquettes pour piles peuvent être multifilms ou stratifiées.

L'on connaît par exemple des étiquettes "pelliculées".

De telles étiquettes comportent généralement une couche inférieure en PVC enduite par dessous d'une couche adhésive, et imprimée par dessus, une couche supérieure en PVC transparent adhérant sur la couche inférieure.

La réalisation d'une étiquette thermorétractable imprimée par dessous le film PVC est délicate du fait d'un effet bi-lames : le PVC a tendance à se rétracter à la chaleur alors que l'encre d'impression a généralement tendance à rester stable.

Ce comportement, au moment de la rétraction des embouts, aura tendance à faire se redresser l'extrémité des étiquettes et de ce fait à empêcher que le rabat sur les tranches extrêmes d'une pile soit tout à fait parfait.

L'invention concerne une étiquette de recouvrement, de protection et de signalisation, notamment pour un composant électrique tel qu'une pile d'alimentation de type jetable, ou batterie, l'étiquette étant telle qu'une thermorétraction permet une excellente finition sur les tranches extrêmes de cette pile, notamment cylindrique.

A cette fin, l'invention concerne, selon un premier aspect, une étiquette de recouvrement, de protection et de signalisation selon la revendication 1, notamment pour un composant électrique tel qu'une pile d'alimentation du type jetable, ou batterie, l'étiquette étant constituée d'une couche en matière synthétique disposée en face extérieure S, la couche comportant en sous-face une couche d'impression apparaissant à l'extérieur par transparence, la couche d'impression comportant sur sa face opposée à la face en contact avec la couche en matière synthétique une couche de métallisation, l'étiquette comportant en outre une couche d'adhésif protégée par une contre-feuille siliconée en vue de l'adhésion de l'étiquette sur son support récepteur, notamment le corps de la pile, l'étiquette comportant une couche comprenant un vernis primaire d'accrochage, cette couche étant disposée entre la couche de métallisation et la couche d'adhésif et protégeant ladite couche de métallisation contre les attaques éventuelles provoquées par les dépôts d'électrolyte sur le corps de pile.

Dans un mode de réalisation, l'étiquette est de forme quadrangulaire et la couche en matière synthétique est constituée d'une feuille de polychlorure de vinyle.

L'invention concerne, selon un deuxième aspect, une pile électrique selon la revendication 11 comportant sur sa paroi extérieure un étiquetage ou une étiquette telle que présentée ci-dessus, les bords de la couche de métallisation étant en retrait par rapport aux bords de la couche d'impression, les bords de la couche d'impression étant en retrait par rapport aux bords de la couche de matière synthétique, les bords de la couche matière synthétique étant disposés sensiblement au même niveau que les bords de la couche comportant un primaire d'accrochage et de la couche d'adhésif lorsque l'étiquette est rabattue sur les extrémités de la pile.

D'autres caractéristiques et avantages de l'invention ressortiront de la description qui suit et qui est donnée en rapport avec une forme de réalisation particulière, présentée à titre d'exemple en se reférant aux dessins annexés :
- la figure 1 est une vue en coupe transversale d'une étiquette selon l'invention décollée de son support siliconé ;
- la figure 2 montre une étiquette en coupe, selon un mode de réalisation de l'invention ;
- la figure 3 représente une vue en coupe partielle d'une pile électrique comportant une étiquette réalisée conformément à l'invention, cette vue étant centrée sur une tranche extrême d'une pile notamment cylindrique.

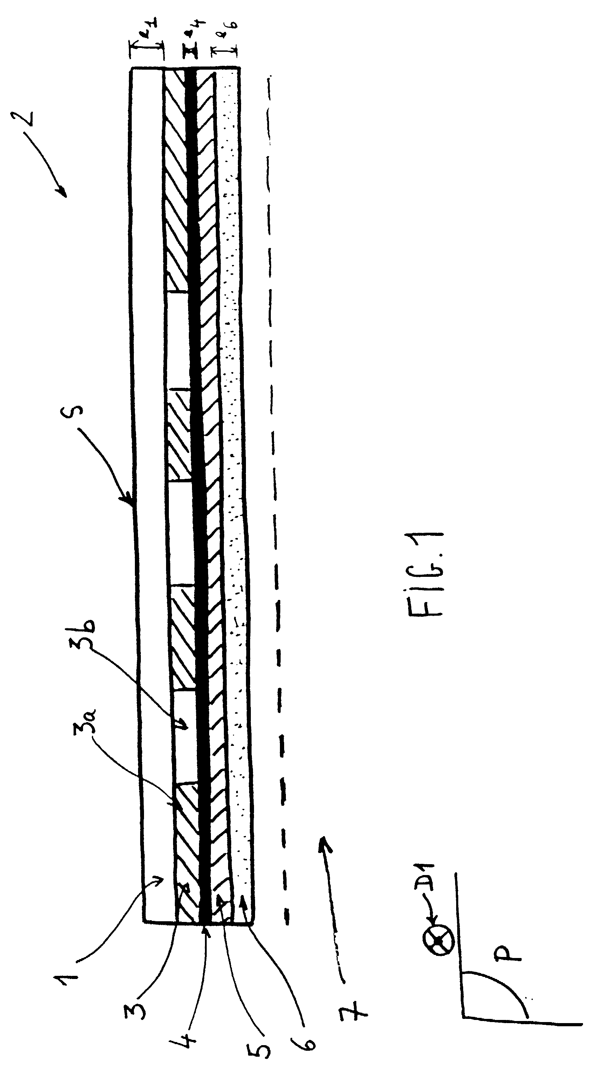

Afin de faciliter la compréhension, l'épaisseur des différentes couches constituant l'étiquette est très exagérée par rapport à la largeur dans les figures 1, 2 et 3.

Dans le mode de réalisation représenté, les épaisseurs des différentes couches d'une étiquette étant très différentes, les proportions entre ces différentes épaisseurs ne sont pas respectées dans les dessins, pour en faciliter la compréhension.

L'on se réfère tout d'abord à la figure 1.

La description de la figure 1 est faite en partant de la surface S qui sera située à l'extérieur du produit à recouvrir, par exemple une pile électrique.

Une étiquette selon l'invention comprend, dans un mode de réalisation, une couche 1 en PVC mono-orienté sens machine, c'est-à-dire sens longitudinal de l'étiquette.

Le terme "longitudinal" se rapporte à une direction D1 perpendiculaire au plan P transversal de la figure 1.

L'épaisseur e₁ de cette couche 1 est par exemple de l'ordre de 50µ.

L'orientation de cette couche 1 permet le rabattement de l'étiquette 2 sur les extrémités d'un objet tel qu'une pile lors de la thermorétraction.

L'étiquette 2 comprend une couche 3 d'impression réalisée sur la face inférieure de la couche 1 en une ou plusieurs couleurs.

L'impression peut être réalisée par tout moyen connu tel que : héliogravure, flexographie, typographie, sérigraphie, offset.

Cette impression peut être continue, ou discontinue.

Dans le mode de réalisation représenté en figure 1, cette impression est discontinue, des zones imprimées 3a altérnant avec des zones non imprimées 3b.

L'impression peut être réalisée en procédé offset avec des encres à réticulation sous rayonnements ultraviolets. De telles encres possédent un bon pouvoir d'accrochage sur la couche 1 en PVC et offrent également un bon support d'accrochage à une couche métallique 4.

Cette couche métallique 4 peut être obtenue par exemple par dépôt sous vide, tel que dépôt physique en phase de vapeur.

Le métal déposé peut être par exemple de l'aluminium.

L'épaisseur e₄ de la couche 4 est de l'ordre de 200 à 300 Å par exemple.

L'étiquette 2 comprend en outre une couche 5 comprenant un primaire d'accrochage tel que les produits suivants : primaire 56435 de la société SICPA, DEMETALU de la société BASF.

Ce primaire 5 peut être déposé par un procédé d'héliogravure ou de flexographie à raison de un à deux grammes par mètre carré exprimé en extrait sec.

Une des fonctions de ce primaire est de permettre un bon accrochage de la couche de colle thermofusible 6, et également dans le cas d'une application sur pile ou batterie électrique, de protéger la couche de métallisation 4 contre les attaques éventuelles provoquées par les dépôts d'électrolytes sur le corps de pile.

La couche 6 est une colle thermofusible ("hot-melt") destinée à l'accrochage de l'étiquette 2 sur le corps de pile 7, représenté en tireté sur la figure 1.

Cette couche 6 peut être déposée sur un support siliconé recevant l'étiquette 2 puis être transférée sur l'étiquette 2 lors de la dépose de celle-ci sur le support siliconé.

L'épaisseur e₆ de la couche de colle thermofusible 6 peut être de l'ordre de 10 à 15µ par exemple.

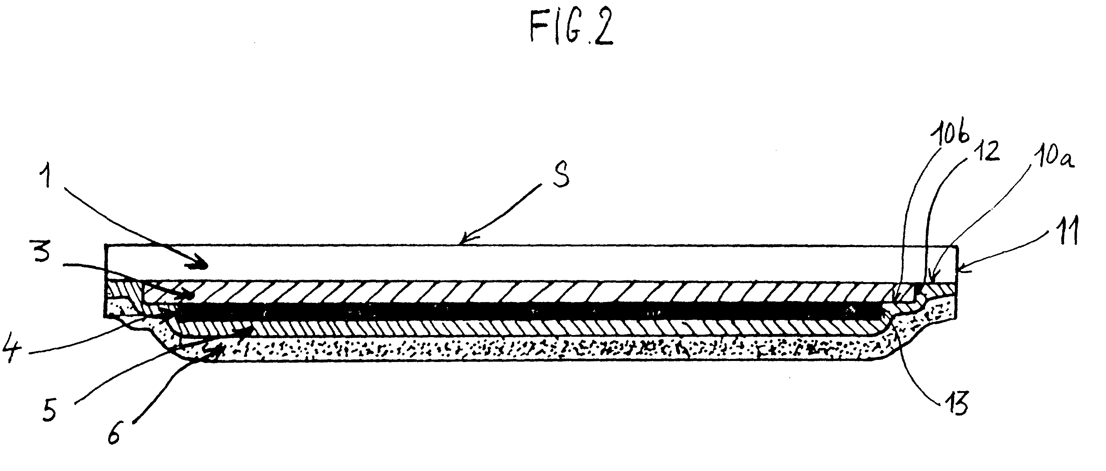

L'on se réfère maintenant à la figure 2.

La figure 2 montre une étiquette obtenue en ménageant des réserves 10a, 10b lors de l'impression et de la métallisation.

La disposition en "escalier" des différentes couches 1, 3, 4 ainsi obtenues, facilite la rétraction de l'étiquette 2 sur le corps de pile 7 en lui permettant d'épouser plus facilement le profil arrondi de celui-ci.

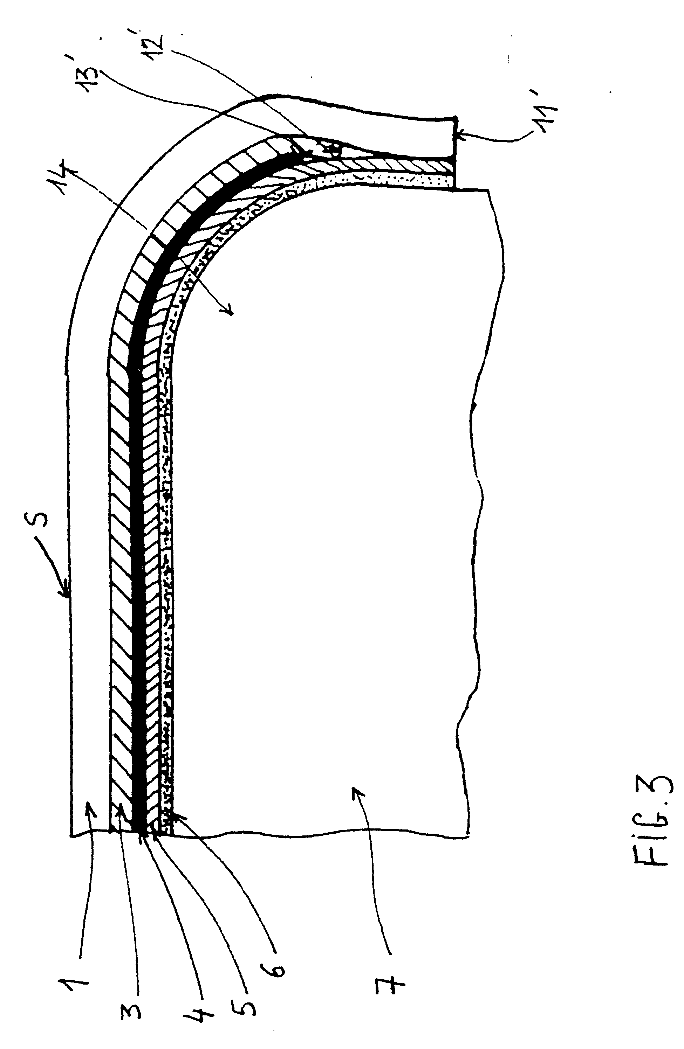

L'on se réfère maintenant à la figure 3.

La figure 3 est une représentation très agrandie de l'extrémité d'une étiquette 2 représentée en figure 2, collée sur une pile 7.

La couche d'impression 3 ne s'étend pas jusqu'au bord 11' du film PVC 1, son bord 12' étant au contraire en retrait par rapport au bord 11' du film 1.

De même, le bord 13' de la couche métallisée 4 est également en retrait par rapport au bord 12' de la couche d'impression 3.

Ceci confère à l'étiquette 2 une plus grande souplesse.

En effet, les couches d'impression 3 et de métallisation 4, malgré leurs faibles épaisseurs, possèdent une rigidité qui s'oppose au bon rabattement de l'étiquette 2.

La disposition en "escalier" permet donc de faciliter le rabattement de l'étiquette 2 sur les extrémités 14 de la pile 7.

La disposition des bords 11', 12' et 13' des couches 1, 3 et 4 après thermorétractation de l'étiquette 2 sur le corps de pile 7 est liée à la disposition "en escalier" des couches 1, 3 et 4 telle que représentée en figure 2, l'étiquette 2 comportant des réserves 10a et 10b.

Des essais ont par ailleurs montré que si la couche de métallisation 4 est prolongée jusqu'au bord 11 de la couche 1 en PVC, cette couche de métallisation 4 est détériorée au moment du rabattement de l'étiquette 2, ce qui nuit à la bonne présentation finale du produit.

## Revendications

1. Etiquette de recouvrement, de protection et de signalisation, notamment pour un composant électrique tel qu'une pile d'alimentation du type jetable, ou batterie, l'étiquette étant constituée d'une couche (1) en matière synthétique disposée en face extérieure S, la couche (1) comportant en sous-face une couche d'impression (3) apparaissant à l'extérieur par transparence, la couche d'impression (3) comportant sur sa face opposée à la face en contact avec la couche (1) en matière synthétique une couche (4) de métallisation, l'étiquette (2) comportant en outre une couche (6) d'adhésif protégée par une contre-feuille siliconée en vue de l'adhésion de l'étiquette (2) sur son support récepteur, notamment le corps (7) de la pile et une couche (5) comprenant un vernis primaire d'accrochage, cette couche (5) étant disposée entre la couche (4) de métallisation et la couche d'adhésif (6) et protégeant ladite couche (4) de métallisation contre les attaques éventuelles provoquées par les dépôts d'électrolyte sur le corps (7) de pile, l'étiquette (2) étant caractérisée en ce que certains de ses bords comportent des réserves (10a,10b), les bords (12) de la couche d'impression (3) étant en retrait dans une réserve (10a) par rapport aux bords de la couche (1) en matière synthétique, les bords (13) de la couche de métallisation (4) étant en retrait dans une réserve (10b) par rapport aux bords (12) de la couche d'impression.

2. Etiquette selon la revendication 1, caractérisée en ce que la couche (1) en matière synthétique est constituée d'une feuille de polychlorure de vinyle.

3. Etiquette selon la revendication 1 ou 2, caractérisée en ce que la couche d'impression (3) est réalisée par un moyen choisi parmi le groupe comprenant : l'héliogravure, la flexographie, la typographie, la sérigraphie, l'offset.

4. Etiquette selon l'une quelconque des revendications 1 à 3, caractérisée en ce que la couche (4) de métallisation est obtenue par dépôt physique en phase vapeur.

5. Etiquette selon l'une quelconque des revendications 1 à 4, caractérisée en ce que la couche d'adhésif (6) est une couche de colle thermofusible.

6. Etiquette selon l'une quelconque des revendications 1 à 5, caractérisée en ce que l'épaisseur de la couche (1) de matière synthétique est de l'ordre de 50 µm.

7. Etiquette selon l'une quelconque des revendications 1 à 6, caractérisée en ce que l'épaisseur de la couche (6) d'adhésif est de l'ordre de 10 à 15 µm.

8. Etiquette selon l'une quelconque des revendications 1 à 7, caractérisée en ce que l'épaisseur de la couche (4) de métallisation est de l'ordre de 200 Å à 300 Å.

9. Etiquette selon la revendication 1, caractérisée en ce que la couche (1) de matière synthétique est constituée d'une feuille de polychlorure de vinyle, mono-orienté, de 50 µm d'épaisseur, la couche (3) d'impression étant réalisée par offset avec des encores d'impression à réticulation sous rayonnement ultra violet, la couche (4) de métallisation étant formée d'aluminium.

10. Etiquette selon l'une quelconque des revendications 1 à 9, caractérisée en ce qu'elle est de forme quadrangulaire, deux bords opposés de l'étiquette (2) appelés à être amenés en position de débordement au-dessus et au-dessous du corps (7) de la pile comportent des réserves (10a, 10b).

11. Pile électrique comportant sur sa paroi extérieure un étiquetage ou une étiquette selon l'une quelconque des revendications précédentes, caractérisée en ce que les bords (13') de la couche de métallisation (4) sont en retrait par rapport aux bords (12') de la couche d'impression (3), les bords (12') de la couche d'impression étant en retrait par rapport aux bords (11') de la couche de matière synthétique, les bords (11') de la couche matière synthétique étant disposés sensiblement au même niveau que les bords de la couche (5) comportant un primaire d'accrochage et les bords de la couche d'adhésif (6) lorsque l'étiquette (2) est rabattue sur les extrémités (14) de la pile.

12. Pile électrique selon la revendication 11 caractérisée en ce qu'elle est de forme cylindrique.

## Patentansprüche

1. Decketikett zum Schutz und zur Beschilderung insbesondere einer elektrischen Komponente wie eine wegwerfbare Versorgungsbatterie, wobei das Etikett aus einer an der Aussenseite S angeordneten Schicht (1) aus Synthetikstoff besteht, wobei die Schicht (1), die nach aussen hin transparent ist, an der Unterseite eine Druckschicht (3) aufweist, wobei die Druckschicht (3) an ihrer der mit der Schicht (1) aus Synthetikstoff in Kontakt stehenden Seite eine Metallisierungsschicht (4) aufweist, wobei das Etikett (2) weiters eine Klebschicht (6) umfasst, die von einem Silikon-Gegenfilm geschützt wird zum Aufkleben des Etiketts (2) auf seinen Empfängerträger, insbesondere dem Körper (7) der Batterie, und eine Schicht (5) mit einem primären Haftlack, wobei diese Schicht (5) zwischen der Metallisierungsschicht (4) und der Klebschicht (6) angeordnet ist und die besagte Metallisierungsschicht (4) gegen eventuelle Angriffe schützt, die von Elektrolyt-Ablagerungen auf dem Körper (7) der Batterie verursacht werden, wobei das Etikett (2) dadurch gekennzeichnet ist, dass einige seiner Ränder Aussparungen (10a, 10b) aufweisen, wobei die Ränder (12) der Druckschicht (3) in einer Aussparung (10a) in Bezug auf die Ränder der Schicht (1) aus Synthetikstoff zurückversetzt sind, während die Ränder (13) der Metallisierungsschicht (4) in einer Aussparung (10b) in Bezug auf die Ränder (12) der Druckschicht zurückversetzt sind.

2. Etikett nach Anspruch 1, dadurch gekennzeichnet, dass die Schicht (1) aus Synthetikstoff aus einem Polyvinylchloridfilm besteht.

3. Etikett nach Anspruch 1 oder 2, dadurch gekennzeichnet, dass die Druckschicht (3) mit einem in der folgenden Gruppe gewählten Mittel hergestellt wird : Tiefdruck, Flexodruck, Hochdruck, Siebdruck, Offset.

4. Etikett nach einem der Ansprüche 1 bis 3, dadurch gekennzeichnet, dass die Metallisierungsschicht (4) durch physikalische Ablagerung in der Dampfphase erhalten wird.

5. Etikett nach einem der Ansprüche 1 bis 4, dadurch gekennzeichnet, dass die Klebschicht (6) eine wärmeschmelzbare Klebstoffschicht ist.

6. Etikett nach einem der Ansprüche 1 bis 5, dadurch gekennzeichnet, dass die Dicke der Schicht (1) aus Synthetikstoff etwa 50 um beträgt.

7. Etikett nach einem der Ansprüche 1 bis 6, dadurch gekennzeichnet, dass die Dicke der Klebschicht (6) etwa 10 bis 15 µm beträgt.

8. Etikett nach einem der Ansprüche 1 bis 7, dadurch gekennzeichnet, dass die Dicke der Metallisierungsschicht (4) etwa 200 Å bis 300 Å beträgt.

9. Etikett nach Anspruch 1, dadurch gekennzeichnet, dass die Schicht (1) aus Synthetikstoff aus einem 50 um dicken Einrichtungs-Polyvinylchloridfilm besteht, wobei die Druckschicht (3) per Offset mit Druckfarben erzeugt wird, die unter Ultraviolettbestrahlung vernetzen, wobei die Metallisierungsschicht (4) aus Aluminium besteht.

10. Etikett nach einem der Ansprüche 1 bis 9, dadurch gekennzeichnet, dass es vierseitig ist, wobei zwei sich gegenüberliegende Ränder des Etiketts (2) sich über und unter dem Körper (7) der mit Aussparungen (10a, 10b) versehenen Batterie überlappen sollen.

11. Elektrische Batterie mit an ihrer Aussenwand einer Beschilderung oder einem Etikett nach einem der vorstehend genannten Ansprüche, dadurch gekennzeichnet, dass die Ränder (13') der Metallisierungsschicht (4) in Bezug auf die Ränder (12') der Druckschicht (3) zurückversetzt sind, wobei die Ränder (12') der Druckschicht in Bezug auf die Ränder (11') der Schicht aus Synthetikstoff zurückversetzt sind, wobei die Ränder (11') der Schicht aus Synthetikstoff etwa auf der gleichen Ebene angeordnet sind wie die Ränder der Schicht (5) mit einem Primärlack und die Ränder der Klebschicht (6), wenn das Etikett (2) über die Enden (14) der Batterie geklappt ist.

12. Elektrische Batterie nach Anspruch 11, dadurch gekennzeichnet, dass sie zylinderförmig ist.

## Claims

1. A covering, protection and identification label, notably for an electrical component such as an electrical supply cell of the disposable type, or battery, the label consisting of a layer (1) of synthetic material disposed on the external face S, the layer (1) having on its underface a printing layer (3) appearing on the outside by transparency, the printing layer (3) having, on its face opposite to the face in contact with the layer (1) of synthetic material, a metallisation layer (4), the label (2) also having a layer (6) of adhesive protected by a silicone-coated counter-sheet with a view to the adhesion of the label (2) to its receiving support, notably the body (7) of the cell, and a layer (5) comprising an attachment primer lacquer, this layer (5) being disposed between the metallisation layer (4) and the layer of adhesive (6) and protecting the said metallisation layer (4) against any attacks caused by deposits of electrolytes on the cell body (7), the label (2) being characterised in that some of its edges have blank parts (10a, 10b), the edges (12) of the printing layer (3) being recessed in a blank part (10a) with respect to the edges of the layer (1) of synthetic material, the edges (13) of the metallisation layer (4) being recessed in a blank part (10b) with respect to the edges (12) of the printing layer.

2. A label according to Claim 1, characterised in that the layer (1) of synthetic material consists of a sheet of polyvinyl chloride.

3. A label according to Claim 1 or 2, characterised in that the printing layer (3) is produced by a means chosen from amongst the group comprising: photogravure, flexographic printing, letterpress printing, screen printing and offset printing.

4. A label according to any one of Claims 1 to 3, characterised in that the metallisation layer (4) is obtained by physical vapour deposition.

5. A label according to any one of Claims 1 to 4, characterised in that the layer of adhesive (6) is a layer of hot-melt glue.

6. A label according to any one of Claims 1 to 5, characterised in that the thickness of the layer (1) of synthetic material is around 50 µm.

7. A label according to any one of Claims 1 to 6, characterised in that the thickness of the layer of adhesive (6) is around 10 to 15 µm.

8. A label according to any one of Claims 1 to 7, characterised in that the thickness of the metallisation layer (4) is around 200 Å to 300 Å.

9. A label according to Claim 1, characterised in that the layer (1) of synthetic material consists of a sheet of polyvinyl chloride, mono-oriented, with a thickness of 50 µm, the printing layer (3) being produced by offset printing with printing inks for crosslinking under ultraviolet radiation, the metallisation layer (4) being formed from aluminium.

10. A label according to any one of Claims 1 to 9, characterised in that it is quadrangular in shape, two opposite edges of the label (2) being designed to be brought into a position of projecting above and below the body (7) of the cell having blank areas (10a, 10b).

11. An electric cell having on its external wall a labelling or a label according to any one of the preceding claims, characterised in that the edges (13') of the metallisation layer (4) are recessed with respect to the edges (12') of the printing layer (3), the edges (12') of the printing layer being recessed with respect to the edges (11') of the layer of synthetic material, the edges (11') of the layer of synthetic material being disposed substantially at the same level as the edges of the layer (5) having an attachment primer and the edges of the layer of adhesive (6) when the label (2) is folded back on the ends (14) of the battery.

12. An electric cell according to Claim 11, characterised in that it is cylindrical in shape.
